# EUROPEAN PATENT SPECIFICATION

(11) **EP 3 767 988 B1**
(45) Date of publication and mention of the grant of the patent: **01.06.2022**
(21) Application number: 18913679.9
(22) Date of filing: 02.04.2018
(51) Int. Cl.: H04W 24/10, H04L 12/26, H04L 29/06, H04W 12/80

(54) **INFORMATION REPORTING METHOD, TERMINAL DEVICE, NETWORK DEVICE, AND COMPUTER STORAGE MEDIUM**
INFORMATIONSMELDEVERFAHREN, ENDGERÄT, NETZWERKVORRICHTUNG UND COMPUTERSPEICHERMEDIUM
PROCÉDÉ DE RAPPORT D'INFORMATIONS, DISPOSITIF TERMINAL, DISPOSITIF DE RÉSEAU ET SUPPORT DE STOCKAGE INFORMATIQUE

(43) Date of publication of application: 20.01.2021
(73) Proprietor: GUANGDONG OPPO MOBILE TELECOMMUNICATIONS CORP., LTD., Wusha, Chang'an Dongguan Guangdong 523860 (CN)
(72) Inventor: YANG, Ning, Dongguan, Guangdong 523860 (CN); TANG, Hai, Dongguan, Guangdong 523860 (CN)
(74) Representative: Manitz Finsterwald Patent- und Rechtsanwaltspartnerschaft mbB
(86) International application number: PCT/CN2018/081641
(87) International publication number: WO 2019/191879

(56) References cited:
- EP-A1- 2 768 182
- WO-A2-2015/113996
- CN-A- 103 152 748
- CN-A- 103 428 642
- CN-A- 103 974 277
- CN-A- 103 974 277
- CN-A- 105 282 782
- US-A1- 2015 009 864

## Description

### TECHNICAL FIELD

The present disclosure generally relates to the technical field of communication, and more particularly to a method for reporting information, a terminal device, a network device.

### BACKGROUND

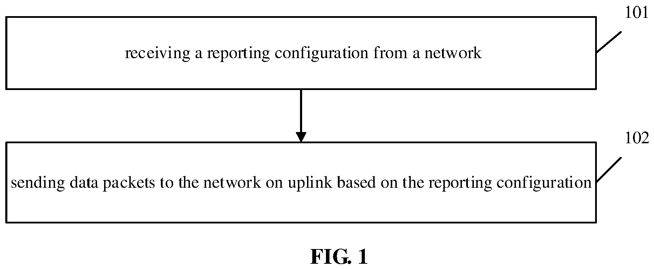

With the development of wireless communication, Device-to-Device communication (as shown in Figure 1) becomes more and more popular. The wireless resource utilization can be increased, the transmission power of a terminal can be reduced and the data transmission latency can be improved through device-to-device (D2D) communication. This technology is applied to public safety and transmission of Internet of Vehicles in LTE. In these scenarios, the transmission format and the sending body of a data packets are controllable, and there is no strict demand for lawful interception.

When the D2D communication technology is applied in ordinary data transmission, it is needed to conduct lawful interception on data sent by terminals due to security and other reasons. The traditional lawful interception is observing a data packet when data passes through a core network to complete the lawful interception. For data of device-to-device communication, lawful interception cannot be guaranteed because data packets do not pass through a core network or even a network.

Related technology is known from WO 2015/113996 A2, CN 103 974 277 A and US 2015/009864A1.

### SUMMARY

The object of the invention is defined in the appended set of claims. An embodiment of the present disclosure provides a method for reporting information, which is applied to a terminal device for wireless communication, as described in any one of claims 1-3.

An embodiment of the present disclosure provides a method for reporting information, which is applied to a network device for wireless communication, as described in claim 4 or 5.

An embodiment of the present disclosure provides a terminal device for wireless communication, as described in any one of claims 6-8.

An embodiment of the present disclosure provides a network device for wireless communication, as described in claim 9 or 10.

According to the technical solution of the embodiments of the present disclosure, at least part of the data packets that have been successfully transmitted and/or are to be transmitted can be sent to a network by uplink. Thus, when a terminal performs D2D data transmission, the network is still able to conduct legal data listening on demand to ensure the demand for lawful interception of data.

### BRIEF DESCRIPTION OF THE DRAWINGS

FIG. 1 is a flowchart of a method for reporting information according to an embodiment of the present disclosure.
FIG. 2 is a schematic diagram of a network structure.
FIG. 3 is a schematic diagram 1 of a processing scenario according to an embodiment of the present disclosure.
FIG. 4 is a schematic diagram 2 of a processing scenario according to an embodiment of the present disclosure.
FIG. 5 is a schematic structural diagram of a terminal device according to an embodiment of the present disclosure.
FIG. 6 is a schematic diagram of a hardware architecture according to an embodiment of the present disclosure.

### DETAILED DESCRIPTION

Reference will now be made in detail to exemplary embodiments, examples of which are illustrated in the accompanying drawings. The accompanying drawings serve to explain the present disclosure rather than to set limitations to the embodiments of the present disclosure.

### Embodiment 1

An embodiment of the present disclosure provides a method for reporting information, which is applied to a terminal device. The method includes:
sending data packets on uplink.

The data packet may be data packets successfully transmitted and/or to be transmitted during D2D data transmission of the terminal device.

This embodiment may specifically be:
selecting the data packets from a PDCP SDU that is successfully transmitted and/or to be transmitted and sending the selected data packets to a network on a Uu interface uplink.

In the solution provided in this embodiment, the terminal device can send a data packet according to its own requirements, specifically:
sending the data packets sent to the network on the uplink based on a reporting configuration.

In addition, this embodiment may provide another solution, that is, the network first sends the reporting configuration to the terminal device, and then the terminal device sends data packets to the network based on the reporting configuration, for example, as shown in FIG. 1.

In operation 101, the reporting configuration sent by the network is received.

In operation 102, the data packets are sent to the network on the uplink based on the reporting configuration.

Both the solution of sending data packets determined by the terminal device itself and the solution of sending data packets based on the reporting configuration configured on the network are based on the following reporting configuration. The reporting configuration may include:
configuring all or part of the data packets that are successfully transmitted and/or to be transmitted for the terminal device for reporting.

In other words, the terminal device can select and send at least part of the data packets that have been successfully transmitted sent to the network, or send all the data packets that have been successfully transmitted sent to the network, or can select part of the data packets to send them to the network. The terminal device can also duplicate all the data packets to be transmitted and send them to the network, or send part of the data packets to be transmitted to the network.

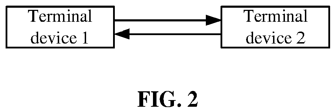

It should be understood that the above-mentioned successfully transmitted data packets and the data packets to be transmitted are data packets transmitted between the terminal device itself and another terminal device having a D2D connection with the terminal device. For example, as shown in FIG. 2, terminal 1 and terminal 2 are connected directly.

Specifically, the reporting configuration may further include: configuring a start and end time and/or a timer for the terminal device for reporting.

In other words, the terminal device can report according to the sending time of the data packet. For example, the data packets that have been successfully transmitted and/or are to be transmitted can be periodically reported, and the period can be 5 minutes per hour. Or, the start and end time of the reporting may be set as 12 a.m.-1 p.m., then, data packets successfully transmitted during 12 a.m.-1 p.m. may be sent to the network at 24 o'clock every day. Or, for data packets to be transmitted, a reporting time may be set as time A-time B, and the data packet to be transmitted may be sent to the network as long as the duration of time A-time B comes.

A timer may be started every time. When the timer reaches a preset threshold, it is determined to start sending. It is to be understood that, when it is determined to start sending data, the timer can also be turned off. For example, when the shutdown time of the timer reaches a shutdown duration threshold, the transmission of data packets can be controlled to stop. This method is more suitable for controlling data packets to be transmitted.

Further, the reporting configuration may further include:
when the terminal device is configured to report part of the data packets, configuring a rule for selecting the part of the data packets.

The rule for selecting the part of the data packets may include at least one of:
selecting a probability of data packet reporting;
selecting packets with a packet label modulus N equal to 0, N being configured by the network and being an integer; or
selecting the part of the data packets based on a preset keyword.

The probability of data packet reporting can be set according to actual situations. This rule can also be combined with the configuration of the start and end time and/or the timer for the terminal device for reporting. For example, the data packets selected in the start and end time and/or the timer configured for the terminal device for reporting may be selected again based on a predetermined probability, and the re-selected data packets may be reported to the network.

The data packets have a packet label modulus N equal to 0. N is configured by the network and is an integer. N can be set according to an actual situation. For example, N can be 2, and thus a data packet with a packet label modulus 2 being 0 is reported to the network. N can also be set as other numerical values, which are not given details here.

Selecting part of the data packets based on a preset keyword may be: reporting a data packet as long as a preset keyword appears in the data packet successfully transmitted; or, reporting a data packet as long as a preset keyword appears in the data packet to be transmitted.

Such a selection process may be combined with configuration of the start and end time and/or the timer for the terminal device for reporting. For example, the data packets selected in the start and end time and/or the timer configured for the terminal device for reporting may be selected again based on a preset probability, and the re-selected data packets may be reported to the network.

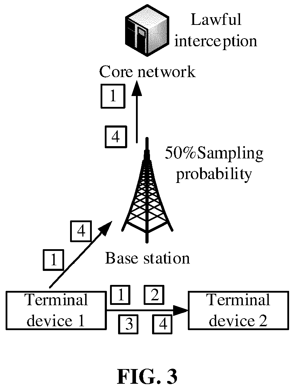

For example, the network may configure, by means of sampling, the terminal device to report partial data to the network for inspection when the terminal device is transmitting all the data through D2D direct connection. The network can set certain rules, such as a sampling ratio or keywords, and the terminal may report according to the sampling ratio or keywords. The network can configure the time when the terminal starts or stops reporting data packets. Referring to FIG. 3, it is assumed that data packets 1, 2, 3, and 4 are exchanged between terminal devices within a period of time, two data packets can be selected from the data packets 1, 2, 3, and 4 during the period of time based on a sampling probability 50%. Data packets 1 and 4 are selected as shown in the figure. These two data packets are reported to the core network through the base station, so that the core network can listen the interaction between directly connected terminal devices.

In addition, this solution can also provide a reporting configuration, based on which all data packets successfully transmitted and/or to be transmitted between directly connected terminal devices are selected and sent to the network.

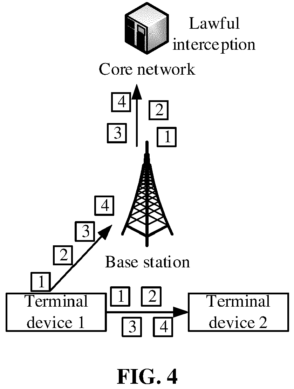

For example, the network can duplicate and transmit data packets. Thus, the network can configure the terminal device to transmit data to the network for inspection when transmitting the data through a D2D direct connection. The data reported to the network is not sensitive to latency, so the latency for reporting may depend on the terminal device. For example, the terminal device may request resources to report corresponding data to the network according to a buffer size. The network may configure the start and end time for the terminal for reporting the data packets, that is, all the data packets successfully transmitted within the start and end time may be sent to the network. For example, referring to FIG. 4, during the configured start and end time, 4 data packets are transmitted between terminal 1 and terminal 2, which are data packets 1, 2, 3, and 4 in the figure, and then terminal 1 duplicate and report all the 4 data packets to the core network through the base station.

Finally, in the solution provided by this embodiment, the network may inform the terminal device of the corresponding configuration information through RRC signaling (such as a sampling probability and/or a start/stop time of packet reporting or a timer), and then the terminal may configure a corresponding PDCP SDU and transmit the data according to the above-mentioned various ways provided in this embodiment.

It can be seen that by adopting the above solution, at least part of data packets that have been successfully transmitted and/or to be transmitted can be sent to a network on uplink. When a terminal device performs D2D data transmission, the network still can perform legal data listening as needed, thereby ensuring the demand for lawful interception of data.

### Embodiment 2

An embodiment of the present disclosure provides a method for reporting information, which is applied to a network device. The method includes:
receiving data packets from a terminal device on uplink.

The data packet may be data packets successfully transmitted and/or to be transmitted during D2D data transmission of the terminal device.

In the solution provided in this embodiment, the terminal device can send a data packet according to its own requirements, specifically:
directly receiving the data packets from the terminal device on the uplink.

In addition, this embodiment may also provide another solution, that is, the network may first send a reporting configuration to the terminal device, and then the terminal device can send a data packet to the network based on the reporting configuration, for example, sending the reporting configuration to the terminal device.

Both the solution of sending data packets determined by the terminal device itself and the solution of sending data packets based on the reporting configuration configured on the network are based on the following reporting configuration. The reporting configuration may include:
configuring all or part of the data packets that are successfully transmitted and/or to be transmitted for the terminal device for reporting.

In other words, the terminal device can select and send at least part of the data packets that have been successfully transmitted sent to the network, or send all the data packets that have been successfully transmitted sent to the network, or can select part of the data packets to send them to the network. The terminal device can also duplicate all the data packets to be transmitted and send them to the network, or send part of the data packets to be transmitted to the network.

It should be understood that the above-mentioned successfully transmitted data packets and the data packets to be transmitted are data packets transmitted between the terminal device itself and another terminal device having a D2D connection with the terminal device. For example, as shown in FIG. 2, terminal 1 and terminal 2 are connected directly.

Specifically, the reporting configuration may further include: configuring a start and end time and/or a timer for the terminal device for reporting.

In other words, the terminal device can report according to the sending time of the data packet. For example, the data packets that have been successfully transmitted and/or are to be transmitted can be periodically reported, and the period can be 5 minutes per hour. Or, the start and end time of the reporting may be set as 12 a.m.-1 p.m., then, data packets successfully transmitted during 12 a.m.-1 p.m. may be sent to the network at 24 o'clock every day. Or, for data packets to be transmitted, a reporting time may be set as time A-time B, and the data packet to be transmitted may be sent to the network as long as the duration of time A-time B comes.

A timer may be started every time. When the timer reaches a preset threshold, it is determined to start sending. It is to be understood that, when it is determined to start sending data, the timer can also be turned off. For example, when the shutdown time of the timer reaches a shutdown duration threshold, the transmission of data packets can be controlled to stop. This method is more suitable for controlling data packets to be transmitted.

Further, the reporting configuration may further include:
when the terminal device is configured to report part of the data packets, configuring a rule for selecting the part of the data packets.

The rule for selecting the part of the data packets may include at least one of:
selecting a probability of data packet reporting;
selecting packets with a packet label modulus N equal to 0, N being configured by the network and being an integer; or
selecting the part of the data packets based on a preset keyword.

The probability of data packet reporting can be set according to actual situations. This rule can also be combined with the configuration of the start and end time and/or the timer for the terminal device for reporting. For example, the data packets selected in the start and end time and/or the timer configured for the terminal device for reporting may be selected again based on a predetermined probability, and the re-selected data packets may be reported to the network.

The data packets have a packet label modulus N equal to 0. N is configured by the network and is an integer. N can be set according to an actual situation. For example, N can be 2, and thus a data packet with a packet label modulus 2 being 0 is reported to the network. N can also be set as other numerical values, which are not given details here.

Selecting part of the data packets based on a preset keyword may be: reporting a data packet as long as a preset keyword appears in the data packet successfully transmitted; or, reporting a data packet as long as a preset keyword appears in the data packet to be transmitted.

Such a selection process may be combined with configuration of the start and end time and/or the timer for the terminal device for reporting. For example, the data packets selected in the start and end time and/or the timer configured for the terminal device for reporting may be selected again based on a preset probability, and the re-selected data packets may be reported to the network.

For example, the network may configure, by means of sampling, the terminal device to report partial data to the network for inspection when the terminal device is transmitting all the data through D2D direct connection. The network can set certain rules, such as a sampling ratio or keywords, and the terminal may report according to the sampling ratio or keywords. The network can configure the time when the terminal starts or stops reporting data packets. Referring to FIG. 3, it is assumed that data packets 1, 2, 3, and 4 are exchanged between terminal devices within a period of time, two data packets can be selected from the data packets 1, 2, 3, and 4 during the period of time based on a sampling probability 50%. Data packets 1 and 4 are selected as shown in the figure. These two data packets are reported to the core network through the base station, so that the core network can listen the interaction between directly connected terminal devices.

In addition, this solution can also provide a reporting configuration in which all data packets successfully transmitted and/or to be transmitted between directly connected terminal devices are selected and sent to the network.

For example, the network can duplicate and transmit data packets. Thus, the network can configure the terminal device to transmit data to the network for inspection when transmitting the data through a D2D direct connection. The data reported to the network is not sensitive to latency, so the latency for reporting may depend on the terminal device. For example, the terminal device may request resources to report corresponding data to the network according to a buffer size. The network may configure the start and end time for the terminal for reporting the data packets, that is, all the data packets successfully transmitted within the start and end time may be sent to the network. For example, referring to FIG. 4, during the configured start and end time, 4 data packets are transmitted between terminal 1 and terminal 2, which are data packets 1, 2, 3, and 4 in the figure, and then terminal 1 duplicate and report all the 4 data packets to the core network through the base station.

Finally, in the solution provided by this embodiment, the network may inform the terminal device of the corresponding configuration information through RRC signaling (such as a sampling probability and/or a start/stop time of packet reporting or a timer), and then the terminal may configure a corresponding PDCP SDU and transmit the data according to the above-mentioned various ways provided in this embodiment.

It can be seen that by adopting the above solution, at least part of data packets that have been successfully transmitted and/or to be transmitted can be sent to a network on uplink. When a terminal device performs D2D data transmission, the network still can perform legal data listening as needed, thereby ensuring the demand for lawful interception of data.

### Embodiment 3

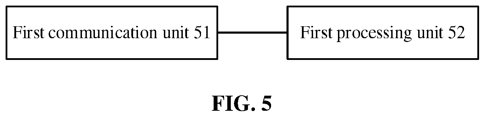

An embodiment of the present disclosure provides a terminal device, as shown in FIG. 5, including:
a first communication unit 51, configured to send data packets on uplink, the data packets are data packets successfully transmitted and/or to be transmitted during D2D data transmission of the terminal device.

The terminal device may further include:
a first processing unit 52, configured to select the data packets from a PDCP SDU that is successfully transmitted and/or to be transmitted.

The first communication unit 51 is further configured to send the selected data packets to a network on a Uu interface uplink.

In the solution provided in this embodiment, the terminal device can send a data packet according to its own requirements, specifically:
the first communication unit 51 is configured to send the data packets to the network on the uplink based on a reporting configuration.

In addition, this embodiment may also provide another solution, that is, the network first sends the reporting configuration to the terminal device, and then the terminal device sends a data packet to the network based on the reporting configuration, for example, sending the reporting configuration to the terminal device.

For example, the first communication unit 51 is configured to receive the reporting configuration from the network and send the data packets to the network on the uplink based on the reporting configuration.

Both the solution of sending data packets determined by the terminal device itself and the solution of sending data packets based on the reporting configuration configured on the network are based on the following reporting configuration. The reporting configuration may include:
configuring all or part of the data packets that are successfully transmitted and/or to be transmitted for the terminal device for reporting.

In other words, the terminal device can select and send at least part of the data packets that have been successfully transmitted sent to the network, or send all the data packets that have been successfully transmitted sent to the network, or can select part of the data packets to send them to the network. The terminal device can also duplicate all the data packets to be transmitted and send them to the network, or send part of the data packets to be transmitted to the network.

It should be understood that the above-mentioned successfully transmitted data packets and the data packets to be transmitted are data packets transmitted between the terminal device itself and another terminal device having a D2D connection with the terminal device. For example, as shown in FIG. 2, terminal 1 and terminal 2 are connected directly.

Specifically, the reporting configuration may further include: configuring a start and end time and/or a timer for the terminal device for reporting.

In other words, the terminal device can report according to the sending time of the data packet. For example, the data packets that have been successfully transmitted and/or are to be transmitted can be periodically reported, and the period can be 5 minutes per hour. Or, the start and end time of the reporting may be set as 12 a.m.-1 p.m., then, data packets successfully transmitted during 12 a.m.-1 p.m. may be sent to the network at 24 o'clock every day. Or, for data packets to be transmitted, a reporting time may be set as time A-time B, and the data packet to be transmitted may be sent to the network as long as the duration of time A-time B comes.

A timer may be started every time. When the timer reaches a preset threshold, it is determined to start sending. It is to be understood that, when it is determined to start sending data, the timer can also be turned off. For example, when the shutdown time of the timer reaches a shutdown duration threshold, the transmission of data packets can be controlled to stop. This method is more suitable for controlling data packets to be transmitted.

Further, the reporting configuration may further include:
when the terminal device is configured to report part of the data packets, configuring a rule for selecting the part of the data packets.

The rule for selecting the part of the data packets may include at least one of:
selecting a probability of data packet reporting;
selecting packets with a packet label modulus N equal to 0, N being configured by the network and being an integer; or
selecting the part of the data packets based on a preset keyword.

The probability of data packet reporting can be set according to actual situations. This rule can also be combined with the configuration of the start and end time and/or the timer for the terminal device for reporting. For example, the data packets selected in the start and end time and/or the timer configured for the terminal device for reporting may be selected again based on a predetermined probability, and the re-selected data packets may be reported to the network.

The data packets have a packet label modulus N equal to 0. N is configured by the network and is an integer. N can be set according to an actual situation. For example, N can be 2, and thus a data packet with a packet label modulus 2 being 0 is reported to the network. N can also be set as other numerical values, which are not given details here.

Selecting part of the data packets based on a preset keyword may be: reporting a data packet as long as a preset keyword appears in the data packet successfully transmitted; or, reporting a data packet as long as a preset keyword appears in the data packet to be transmitted.

Such a selection process may be combined with configuration of the start and end time and/or the timer for the terminal device for reporting. For example, the data packets selected in the start and end time and/or the timer configured for the terminal device for reporting may be selected again based on a preset probability, and the re-selected data packets may be reported to the network.

For example, the network may configure, by means of sampling, the terminal device to report partial data to the network for inspection when the terminal device is transmitting all the data through D2D direct connection. The network can set certain rules, such as a sampling ratio or keywords, and the terminal may report according to the sampling ratio or keywords. The network can configure the time when the terminal starts or stops reporting data packets. Referring to FIG. 3, it is assumed that data packets 1, 2, 3, and 4 are exchanged between terminal devices within a period of time, two data packets can be selected from the data packets 1, 2, 3, and 4 during the period of time based on a sampling probability 50%. Data packets 1 and 4 are selected as shown in the figure. These two data packets are reported to the core network through the base station, so that the core network can listen the interaction between directly connected terminal devices.

In addition, this solution can also provide a reporting configuration in which all data packets successfully transmitted and/or to be transmitted between directly connected terminal devices are selected and sent to the network.

For example, the network can duplicate and transmit data packets. Thus, the network can configure the terminal device to transmit data to the network for inspection when transmitting the data through a D2D direct connection. The data reported to the network is not sensitive to latency, so the latency for reporting may depend on the terminal device. For example, the terminal device may request resources to report corresponding data to the network according to a buffer size. The network may configure the start and end time for the terminal for reporting the data packets, that is, all the data packets successfully transmitted within the start and end time may be sent to the network. For example, referring to FIG. 4, during the configured start and end time, 4 data packets are transmitted between terminal 1 and terminal 2, which are data packets 1, 2, 3, and 4 in the figure, and then terminal 1 duplicate and report all the 4 data packets to the core network through the base station.

Finally, in the solution provided by this embodiment, the network may inform the terminal device of the corresponding configuration information through RRC signaling (such as a sampling probability and/or a start/stop time of packet reporting or a timer), and then the terminal may configure a corresponding PDCP SDU and transmit the data according to the above-mentioned various ways provided in this embodiment.

It can be seen that by adopting the above solution, at least part of data packets that have been successfully transmitted and/or to be transmitted can be sent to a network on uplink. When a terminal device performs D2D data transmission, the network still can perform legal data listening as needed, thereby ensuring the demand for lawful interception of data.

### Embodiment 4

An embodiment of the present disclosure provides a network device, including:
a second communication unit configured to receive data packets from a terminal device on uplink, the data packets being data packets successfully transmitted and/or to be transmitted during D2D data transmission of the terminal device.

In the solution provided in this embodiment, the terminal device can send a data packet according to its own requirements, specifically: the second communication unit is configured to directly receive data packets from the terminal device on the uplink.

In addition, this embodiment may also provide another solution, that is, the network may first send a reporting configuration to the terminal device, and then the terminal device can send a data packet to the network based on the reporting configuration, for example, sending the reporting configuration to the terminal device.

Both the solution of sending data packets determined by the terminal device itself and the solution of sending data packets based on the reporting configuration configured on the network are based on the following reporting configuration. The reporting configuration may include:
configuring all or part of the data packets that are successfully transmitted and/or to be transmitted for the terminal device for reporting.

In other words, the terminal device can select and send at least part of the data packets that have been successfully transmitted sent to the network, or send all the data packets that have been successfully transmitted sent to the network, or can select part of the data packets to send them to the network. The terminal device can also duplicate all the data packets to be transmitted and send them to the network, or send part of the data packets to be transmitted to the network.

It should be understood that the above-mentioned successfully transmitted data packets and the data packets to be transmitted are data packets transmitted between the terminal device itself and another terminal device having a D2D connection with the terminal device. For example, as shown in FIG. 2, terminal 1 and terminal 2 are connected directly.

Specifically, the reporting configuration further includes: configuring a start and end time and/or a timer for the terminal device for reporting.

In other words, the terminal device can report according to the sending time of the data packet. For example, the data packets that have been successfully transmitted and/or are to be transmitted can be periodically reported, and the period can be 5 minutes per hour. Or, the start and end time of the reporting may be set as 12 a.m.-1 p.m., then, data packets successfully transmitted during 12 a.m.-1 p.m. may be sent to the network at 24 o'clock every day. Or, for data packets to be transmitted, a reporting time may be set as time A-time B, and the data packet to be transmitted may be sent to the network as long as the duration of time A-time B comes.

A timer may be started every time. When the timer reaches a preset threshold, it is determined to start sending. It is to be understood that, when it is determined to start sending data, the timer can also be turned off. For example, when the shutdown time of the timer reaches a shutdown duration threshold, the transmission of data packets can be controlled to stop. This method is more suitable for controlling data packets to be transmitted.

Further, the reporting configuration may further include:
when the terminal device is configured to report part of the data packets, configuring a rule for selecting the part of the data packets.

The rule for selecting the part of the data packets may include at least one of:
selecting a probability of data packet reporting;
selecting packets with a packet label modulus N equal to 0, N being configured by the network and being an integer; or
selecting the part of the data packets based on a preset keyword.

The probability of data packet reporting can be set according to actual situations. This rule can also be combined with the configuration of the start and end time and/or the timer for the terminal device for reporting. For example, the data packets selected in the start and end time and/or the timer configured for the terminal device for reporting may be selected again based on a predetermined probability, and the re-selected data packets may be reported to the network.

The data packets have a packet label modulus N equal to 0. N is configured by the network and is an integer. N can be set according to an actual situation. For example, N can be 2, and thus a data packet with a packet label modulus 2 being 0 is reported to the network. N can also be set as other numerical values, which are not given details here.

Selecting part of the data packets based on a preset keyword may be: reporting a data packet as long as a preset keyword appears in the data packet successfully transmitted; or, reporting a data packet as long as a preset keyword appears in the data packet to be transmitted.

Such a selection process may be combined with configuration of the start and end time and/or the timer for the terminal device for reporting. For example, the data packets selected in the start and end time and/or the timer configured for the terminal device for reporting may be selected again based on a preset probability, and the re-selected data packets may be reported to the network.

For example, the network may configure, by means of sampling, the terminal device to report partial data to the network for inspection when the terminal device is transmitting all the data through D2D direct connection. The network can set certain rules, such as a sampling ratio or keywords, and the terminal may report according to the sampling ratio or keywords. The network can configure the time when the terminal starts or stops reporting data packets. Referring to FIG. 3, it is assumed that data packets 1, 2, 3, and 4 are exchanged between terminal devices within a period of time, two data packets can be selected from the data packets 1, 2, 3, and 4 during the period of time based on a sampling probability 50%. Data packets 1 and 4 are selected as shown in the figure. These two data packets are reported to the core network through the base station, so that the core network can listen the interaction between directly connected terminal devices.

In addition, this solution can also provide a reporting configuration in which all data packets successfully transmitted and/or to be transmitted between directly connected terminal devices are selected and sent to the network.

For example, the network can duplicate and transmit data packets. Thus, the network can configure the terminal device to transmit data to the network for inspection when transmitting the data through a D2D direct connection. The data reported to the network is not sensitive to latency, so the latency for reporting may depend on the terminal device. For example, the terminal device may request resources to report corresponding data to the network according to a buffer size. The network may configure the start and end time for the terminal for reporting the data packets, that is, all the data packets successfully transmitted within the start and end time may be sent to the network. For example, referring to FIG. 4, during the configured start and end time, 4 data packets are transmitted between terminal 1 and terminal 2, which are data packets 1, 2, 3, and 4 in the figure, and then terminal 1 duplicate and report all the 4 data packets to the core network through the base station.

Finally, in the solution provided by this embodiment, the network may inform the terminal device of the corresponding configuration information through RRC signaling (such as a sampling probability and/or a start/stop time of packet reporting or a timer), and then the terminal may configure a corresponding PDCP SDU and transmit the data according to the above-mentioned various ways provided in this embodiment.

It can be seen that by adopting the above solution, at least part of data packets that have been successfully transmitted and/or to be transmitted can be sent to a network on uplink. When a terminal device performs D2D data transmission, the network still can perform legal data listening as needed, thereby ensuring the demand for lawful interception of data.

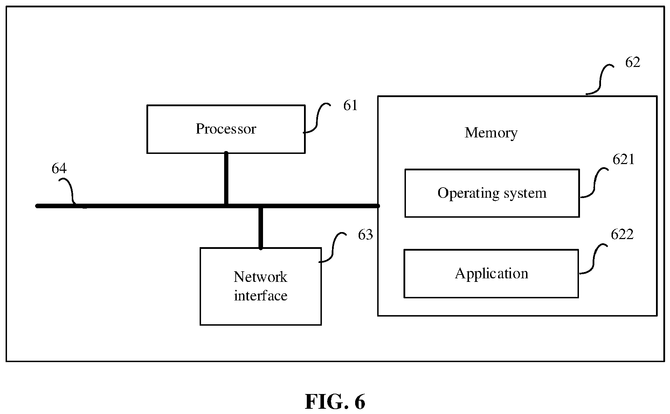

An embodiment of the present disclosure further provides a hardware composition architecture of a terminal device or a network device. As shown in FIG. 6, the architecture includes: at least one processor 61, a memory 62, and at least one network interface 63. All the components are coupled together by a bus system 64. It can be understood that, the bus system 64 is configured to implement connection and communication between the components. In addition to a data bus, the bus system 64 further can include a power supply bus, a control bus, and a status signal bus. However, for the purpose of clear description, all buses are marked as the bus system 64 in FIG. 6.

It can be understood that the memory 62 in the embodiments of the present disclosure may be a volatile memory or a nonvolatile memory, or may include a volatile memory and a nonvolatile memory.

In some implementations, the memory 62 is configured to store the following elements: an executable module or a data structure, or a subset thereof, or an extended set thereof: an operating system 621 and an application program 622.

The processor 61 is capable of processing operations of the method in the foregoing embodiment 1 or 2, and details are not described herein again.

An embodiment of the present disclosure provides a computer storage medium. The computer storage medium has stored computer-executable instructions that, when being executed, can implement the operations of the method in the foregoing embodiment 1 or 2.

When the devices described above in the embodiments of the present invention are implemented in a form of a software functional module and sold or used as independent products, the devices may be alternatively stored in a computer-readable storage medium. Based on such an understanding, the technical solutions of the embodiments of the present disclosure essentially, or the part contributing to the prior art may be implemented in a form of a software product. The computer software product is stored in a storage medium and includes several instructions for instructing a computer device (which may be a personal computer, a server, a network device, or the like) to perform all or some of the methods described in the embodiments of the present disclosure. The foregoing storage medium includes any medium that can store program code, such as a USB flash drive, a removable hard disk, a read-only memory (ROM), a magnetic disk, or a compact disc. In this way, the embodiments of the present disclosure are not limited to any specific combination of hardware and software.

Although preferred embodiments of the present disclosure are described for an exemplary objective, a person skilled in the art may be aware of various possible modifications, additions, and replacements. Therefore, the scope of the present invention shall not be limited to the foregoing embodiments.

## Claims

1. A method for reporting information performed by a terminal device for wireless communication, the method comprising:
receiving (101) a reporting configuration from a network; and
sending (102) data packets to the network device on uplink based on the reporting configuration,
wherein the data packets are data packets successfully transmitted and/or to be transmitted during device-to-device, D2D, data transmission of the terminal device,
wherein the reporting configuration comprises:
configuring the terminal device to report all or part of the data packets that are successfully transmitted and/or to be transmitted; and
when the terminal device is configured to report part of the data packets, configuring a rule for selecting the part of the data packets,
**characterized in that**,
the rule for selecting the part of the data packets comprises:
selecting the part of the data packets based on a preset keyword, wherein the selecting comprises selecting a data packet for reporting based on the preset keyword appearing in the data packet.

2. The method of claim 1, wherein the rule for selecting the part of the data packets further comprises at least one of:
selecting a probability of data packet reporting; and
selecting packets with a packet label modulus N equal to 0, N being configured by the network and being an integer.

3. The method of claim 1 or 2, wherein sending the data packets to the network on the uplink comprises:
selecting the data packets from a PDCP SDU that is successfully transmitted and/or to be transmitted, and then sending the selected data packets to the network on a Uu interface uplink.

4. A method for reporting information performed by a a network device for wireless communication, the method comprising:
sending a reporting configuration to a terminal device; and
receiving data packets from the terminal device on uplink;
wherein the data packets are data packets successfully transmitted and/or to be transmitted during device-to-device,D2D, data transmission of the terminal device,
wherein the reporting configuration comprises:
configuring the terminal device to report all or part of the data packets that are successfully transmitted; and
when the terminal device is configured to report part of the data packets, configuring a rule for selecting the part of the data packets,
**characterized in that**,
the rule for selecting the part of the data packets comprises:
selecting the part of the data packets based on a preset keyword, wherein the selecting comprises selecting a data packet for reporting based on the preset keyword appearing in the data packet. Z

5. The method of claim 4, wherein the rule for selecting the part of the data packets further comprises at least one of:
selecting a probability of data packet reporting; and
selecting packets with a packet label modulus N equal to 0, N being configured by the network and being an integer.

6. A terminal device for wireless communication, comprising:
a first communication unit (51), configured to receive a reporting configuration from a network and send data packets to the network device
on uplink based on the reporting configuration;
wherein the data packets are data packets successfully transmitted and/or to be transmitted during device-to-device, D2D, data transmission of the terminal device,
wherein the reporting configuration comprises:
configuring the terminal device to report all or part of the data packets that are successfully transmitted and/or to be transmitted; and
when the terminal device is configured to report part of the data packets, configuring a rule for selecting the part of the data packets,
**characterized in that**,
the rule for selecting the part of the data packets comprises:
selecting the part of the data packets based on a preset keyword, wherein the selecting comprises selecting a data packet for reporting based on the preset keyword appearing in the data packet.

7. The terminal device of claim 6, wherein the rule for selecting the part of the data packets further comprises at least one of:
selecting a probability of data packet reporting; and
selecting packets with a packet label modulus N equal to 0, N being configured by the network and being an integer.

8. The terminal device of claim 6 or 7, further comprising:
a first processing unit (52) configured to select the data packets from a PDCP SDU that is successfully transmitted and/or to be transmitted;
wherein the first communication unit (51) is configured to send the selected data packets to the network on a Uu interface uplink.

9. A network device for wireless communication, comprising:
a second communication unit, configured to send a reporting configuration to a terminal device and receive data packets from the terminal device on uplink;
wherein the data packets are data packets successfully transmitted and/or to be transmitted during device-to-device, D2D, data transmission of the terminal device,
wherein the reporting configuration comprises:
configuring the terminal device to report all or part of the data packets that are successfully transmitted; and
when the terminal device is configured to report part of the data packets, configuring a rule for selecting the part of the data packets,
**characterized in that**,
the rule for selecting the part of the data packets comprises:
selecting the part of the data packets based on a preset keyword, wherein the selecting comprises selecting a data packet for reporting based on the preset keyword appearing in the data packet.

10. The network device of claim 9, wherein the rule for selecting the part of the data packets further comprises at least one of:
selecting a probability of data packet reporting; and
selecting packets with a packet label modulus N equal to 0, N being configured by the network and being an integer.

## Patentansprüche

1. Verfahren zur Berichterstattung von Informationen, durchgeführt durch eine Endgerätvorrichtung für drahtlose Kommunikation, das Verfahren umfassend:
Empfangen (101) einer Berichterstattungskonfiguration von einem Netzwerk; und
Senden (102) von Datenpaketen an die Netzwerkvorrichtung auf der Aufwärtsstrecke basierend auf der Berichterstattungskonfiguration,
wobei die Datenpakete Datenpakete sind, die während Vorrichtung-zu-Vorrichtung- bzw. D2D-Datenübertragung der Endgerätvorrichtung erfolgreich übertragen wurden und/oder zu übertragen sind,
wobei die Berichterstattungskonfiguration umfasst:
Konfigurieren der Endgerätvorrichtung zur Berichterstattung sämtlicher oder eines Teils der Datenpakete, die erfolgreich übertragen wurden und/oder zu übertragen sind; und
wenn die Endgerätvorrichtung zur Berichterstattung eines Teils der Datenpakete konfiguriert ist, Konfigurieren einer Regel zum Auswählen des Teils der Datenpakete,
**dadurch gekennzeichnet, dass**
die Regel zum Auswählen des Teils der Datenpakete umfasst:
Auswählen des Teils der Datenpakete basierend auf einem im Voraus eingestellten Schlüsselwort, wobei das Auswählen umfasst, ein Datenpaket zur Berichterstattung basierend auf dem im Voraus eingestellten Schlüsselwort, das in dem Datenpaket erscheint, auszuwählen.

2. Verfahren nach Anspruch 1, wobei die Regel zum Auswählen des Teils der Datenpakete ferner mindestens eines von Folgendem umfasst:
Auswählen einer Wahrscheinlichkeit von Datenpaket-Berichterstattung; und
Auswählen von Datenpaketen mit einem Paketetikettenmodul N gleich 0, wobei N durch das Netzwerk konfiguriert wird und eine ganze Zahl ist.

3. Verfahren nach Anspruch 1 oder 2, wobei Senden der Datenpakete an das Netzwerk auf der Aufwärtsstrecke umfasst:
Auswählen der Datenpakete aus einer PDCP SDU, die erfolgreich übertragen wurde und/oder zu übertragen ist, und dann Senden der ausgewählten Datenpakete an das Netzwerk auf einer Uu-Schnittstellen-Aufwärtsstrecke.

4. Verfahren zur Berichterstattung von Informationen, durchgeführt durch eine Netzwerkvorrichtung für drahtlose Kommunikation, das Verfahren umfassend:
Senden einer Berichterstattungskonfiguration an eine Endgerätvorrichtung; und
Empfangen von Datenpaketen von der Endgerätvorrichtung auf der Aufwärtsstrecke;
wobei die Datenpakete Datenpakete sind, die während Vorrichtung-zu-Vorrichtung- bzw. D2D-Datenübertragung der Endgerätvorrichtung erfolgreich übertragen wurden und/oder zu übertragen sind,
wobei die Berichterstattungskonfiguration umfasst:
Konfigurieren der Endgerätvorrichtung zur Berichterstattung sämtlicher oder eines Teils der Datenpakete, die erfolgreich übertragen wurden; und
wenn die Endgerätvorrichtung zur Berichterstattung eines Teils der Datenpakete konfiguriert ist, Konfigurieren einer Regel zum Auswählen des Teils der Datenpakete,
**dadurch gekennzeichnet, dass**
die Regel zum Auswählen des Teils der Datenpakete umfasst:
Auswählen des Teils der Datenpakete basierend auf einem im Voraus eingestellten Schlüsselwort, wobei das Auswählen umfasst, ein Datenpaket zur Berichterstattung basierend auf dem im Voraus eingestellten Schlüsselwort, das in dem Datenpaket erscheint, auszuwählen.

5. Verfahren nach Anspruch 4, wobei die Regel zum Auswählen des Teils der Datenpakete ferner mindestens eines von Folgendem umfasst:
Auswählen einer Wahrscheinlichkeit von Datenpaket-Berichterstattung; und
Auswählen von Datenpaketen mit einem Paketetikettenmodul N gleich 0, wobei N durch das Netzwerk konfiguriert wird und eine ganze Zahl ist.

6. Endgerätvorrichtung für drahtlose Kommunikation, umfassend:
eine erste Kommunikationseinheit (51), konfiguriert zum Empfangen einer Berichterstattungskonfiguration von einem Netzwerk und Senden von Datenpaketen an die Netzwerkvorrichtung auf der Aufwärtsstrecke basierend auf der Berichterstattungskonfiguration;
wobei die Datenpakete Datenpakete sind, die während Vorrichtung-zu-Vorrichtung- bzw. D2D-Datenübertragung der Endgerätvorrichtung erfolgreich übertragen wurden und/oder zu übertragen sind,
wobei die Berichterstattungskonfiguration umfasst:
Konfigurieren der Endgerätvorrichtung zur Berichterstattung sämtlicher oder eines Teils der Datenpakete, die erfolgreich übertragen wurden und/oder zu übertragen sind; und
wenn die Endgerätvorrichtung zur Berichterstattung eines Teils der Datenpakete konfiguriert ist, Konfigurieren einer Regel zum Auswählen des Teils der Datenpakete,
**dadurch gekennzeichnet, dass**
die Regel zum Auswählen des Teils der Datenpakete umfasst:
Auswählen des Teils der Datenpakete basierend auf einem im Voraus eingestellten Schlüsselwort, wobei das Auswählen umfasst, ein Datenpaket zur Berichterstattung basierend auf dem im Voraus eingestellten Schlüsselwort, das in dem Datenpaket erscheint, auszuwählen.

7. Endgerätvorrichtung nach Anspruch 6, wobei die Regel zum Auswählen des Teils der Datenpakete ferner mindestens eines von Folgendem umfasst:
Auswählen einer Wahrscheinlichkeit von Datenpaket-Berichterstattung; und
Auswählen von Datenpaketen mit einem Paketetikettenmodul N gleich 0, wobei N durch das Netzwerk konfiguriert wird und eine ganze Zahl ist.

8. Endgerätvorrichtung nach Anspruch 6 oder 7, ferner umfassend:
eine erste Verarbeitungseinheit (52), konfiguriert zum Auswählen der Datenpakete aus einer PDCP SDU, die erfolgreich übertragen wurde und/oder zu übertragen ist;
wobei die erste Kommunikationseinheit (51) konfiguriert ist zum Senden der ausgewählten Datenpakete an das Netzwerk auf einer Uu-Schnittstellen-Aufwärtsstrecke.

9. Netzwerkvorrichtung für drahtlose Kommunikation, umfassend:
eine zweite Kommunikationseinheit, konfiguriert zum Senden einer Berichterstattungskonfiguration an eine Endgerätvorrichtung und Empfangen von Datenpaketen von der Endgerätvorrichtung auf der Aufwärtsstrecke;
wobei die Datenpakete Datenpakete sind, die während Vorrichtung-zu-Vorrichtung- bzw. D2D-Datenübertragung der Endgerätvorrichtung erfolgreich übertragen wurden und/oder zu übertragen sind, wobei die Berichterstattungskonfiguration umfasst:
Konfigurieren der Endgerätvorrichtung zur Berichterstattung sämtlicher oder eines Teils der Datenpakete, die erfolgreich übertragen wurden; und
wenn die Endgerätvorrichtung zur Berichterstattung eines Teils der Datenpakete konfiguriert ist, Konfigurieren einer Regel zum Auswählen des Teils der Datenpakete,
**dadurch gekennzeichnet, dass**
die Regel zum Auswählen des Teils der Datenpakete umfasst:
Auswählen des Teils der Datenpakete basierend auf einem im Voraus eingestellten Schlüsselwort, wobei das Auswählen umfasst, ein Datenpaket zur Berichterstattung basierend auf dem im Voraus eingestellten Schlüsselwort, das in dem Datenpaket erscheint, auszuwählen.

10. Netzwerkvorrichtung nach Anspruch 9, wobei die Regel zum Auswählen des Teils der Datenpakete ferner mindestens eines von Folgendem umfasst:
Auswählen einer Wahrscheinlichkeit von Datenpaket-Berichterstattung; und
Auswählen von Datenpaketen mit einem Paketetikettenmodul N gleich 0, wobei N durch das Netzwerk konfiguriert wird und eine ganze Zahl ist.

## Revendications

1. Procédé de rendu de comptes d'informations, réalisé par un dispositif terminal destiné à une communication sans fil, le procédé comportant les étapes consistant à :
recevoir (101) une configuration de rendu de comptes en provenance d'un réseau ; et
envoyer (102) des paquets de données au dispositif de réseau sur une liaison montante d'après la configuration de rendu de comptes,
les paquets de données étant des paquets de données transmis avec succès et/ou à transmettre pendant une transmission de données de dispositif à dispositif, D2D, du dispositif terminal,
la configuration de rendu de comptes comportant :
la configuration du dispositif terminal pour rendre compte de la totalité ou d'une partie des paquets de données qui sont transmis avec succès et/ou à transmettre ; et
lorsque le dispositif terminal est configuré pour rendre compte d'une partie des paquets de données, la configuration d'une règle servant à sélectionner la partie des paquets de données,
**caractérisée en ce que**
la règle servant à sélectionner la partie des paquets de données comporte :
la sélection de la partie des paquets de données d'après un mot-clé prédéfini, la sélection comportant la sélection d'un paquet de données pour le rendu de comptes sur la base de l'apparition du mot-clé prédéfini dans le paquet de données.

2. Procédé selon la revendication 1, la règle qui sert à sélectionner la partie des paquets de données comportant en outre au moins une règle parmi :
la sélection d'une probabilité de rendu de comptes du paquet de données ; et
la sélection de paquets présentant un module N d'étiquette de paquet égal à 0, N étant configuré par le réseau et étant un entier.

3. Procédé selon les revendications 1 ou 2, l'envoi des paquets de données au réseau sur la liaison montante comportant :
la sélection des paquets de données à partir d'une SDU de PDCP qui est transmise avec succès et/ou à transmettre, puis l'envoi des paquets de données sélectionnés au réseau sur une liaison montante d'interface Uu.

4. Procédé de rendu de comptes d'informations, réalisé par un dispositif de réseau destiné à une communication sans fil, le procédé comportant les étapes consistant à :
envoyer une configuration de rendu de comptes à un dispositif terminal ; et
recevoir des paquets de données en provenance du dispositif terminal sur une liaison montante ;
les paquets de données étant des paquets de données transmis avec succès et/ou à transmettre pendant une transmission de données de dispositif à dispositif, D2D, du dispositif terminal,
la configuration de rendu de comptes comportant :
la configuration du dispositif terminal pour rendre compte de la totalité ou d'une partie des paquets de données qui sont transmis avec succès ; et
lorsque le dispositif terminal est configuré pour rendre compte d'une partie des paquets de données, la configuration d'une règle servant à sélectionner la partie des paquets de données,
**caractérisée en ce que**
la règle servant à sélectionner la partie des paquets de données comporte :
la sélection de la partie des paquets de données d'après un mot-clé prédéfini, la sélection comportant la sélection d'un paquet de données pour le rendu de comptes sur la base de l'apparition du mot-clé prédéfini dans le paquet de données.

5. Procédé selon la revendication 4, la règle qui sert à sélectionner la partie des paquets de données comportant en outre au moins une règle parmi :
la sélection d'une probabilité de rendu de comptes du paquet de données ; et
la sélection de paquets présentant un module N d'étiquette de paquet égal à 0, N étant configuré par le réseau et étant un entier.

6. Dispositif terminal destiné à une communication sans fil, comportant :
une première unité (51) de communication, configurée pour recevoir une configuration de rendu de comptes en provenance d'un réseau et envoyer des paquets de données au dispositif de réseau sur une liaison montante d'après la configuration de rendu de comptes ;
les paquets de données étant des paquets de données transmis avec succès et/ou à transmettre pendant une transmission de données de dispositif à dispositif, D2D,
du dispositif terminal,
la configuration de rendu de comptes comportant :
la configuration du dispositif terminal pour rendre compte de la totalité ou d'une partie des paquets de données qui sont transmis avec succès et/ou à transmettre ; et
lorsque le dispositif terminal est configuré pour rendre compte d'une partie des paquets de données, la configuration d'une règle servant à sélectionner la partie des paquets de données,
**caractérisée en ce que**
la règle servant à sélectionner la partie des paquets de données comporte :
la sélection de la partie des paquets de données d'après un mot-clé prédéfini, la sélection comportant la sélection d'un paquet de données pour le rendu de comptes sur la base de l'apparition du mot-clé prédéfini dans le paquet de données.

7. Dispositif terminal selon la revendication 6, la règle qui sert à sélectionner la partie des paquets de données comportant en outre au moins une règle parmi :
la sélection d'une probabilité de rendu de comptes du paquet de données ; et
la sélection de paquets présentant un module N d'étiquette de paquet égal à 0, N étant configuré par le réseau et étant un entier.

8. Dispositif terminal selon les revendications 6 ou 7, comportant en outre :
une première unité (52) de traitement configurée pour sélectionner les paquets de données à partir d'une SDU de PDCP qui est transmise avec succès et/ou à transmettre ;
la première unité (51) de communication étant configurée pour envoyer les paquets de données sélectionnés au réseau sur une liaison montante d'interface Uu.

9. Dispositif de réseau destiné à une communication sans fil, comportant :
une seconde unité de communication, configurée pour envoyer une configuration de rendu de comptes à un dispositif terminal et recevoir des paquets de données en provenance du dispositif terminal sur une liaison montante ;
les paquets de données étant des paquets de données transmis avec succès et/ou à transmettre pendant une transmission de données de dispositif à dispositif, D2D, du dispositif terminal,
la configuration de rendu de comptes comportant :
la configuration du dispositif terminal pour rendre compte de la totalité ou d'une partie des paquets de données qui sont transmis avec succès ; et
lorsque le dispositif terminal est configuré pour rendre compte d'une partie des paquets de données, la configuration d'une règle servant à sélectionner la partie des paquets de données,
**caractérisée en ce que**
la règle servant à sélectionner la partie des paquets de données comporte :
la sélection de la partie des paquets de données d'après un mot-clé prédéfini, la sélection comportant la sélection d'un paquet de données pour le rendu de comptes sur la base de l'apparition du mot-clé prédéfini dans le paquet de données.

10. Dispositif de réseau selon la revendication 9, la règle qui sert à sélectionner la partie des paquets de données comportant en outre au moins une règle parmi :
la sélection d'une probabilité de rendu de comptes du paquet de données ; et
la sélection de paquets présentant un module N d'étiquette de paquet égal à 0, N étant configuré par le réseau et étant un entier.
